# EUROPEAN PATENT SPECIFICATION

(11) **EP 0 790 950 B1**
(45) Date of publication and mention of the grant of the patent: **09.02.2000**
(21) Application number: 95936448.0
(22) Date of filing: 09.11.1995
(51) Int. Cl.: B65G 57/10, F25D 25/04

(54) **A system comprising a device for transferring packages from a conveyor into a three-dimensional array on a shelf, a shelf supporting device, a trolley and a shelf for use in connection with the transferring device**
Vorrichtung zur Übergabe von Packungen von einem Förderer in eine räumliche Anordnung in einer Regalbodentrageinrichtung sowie Transportwagen und Regalboden zur Verwendung in Verbindung mit dieser Übergabevorrichtung
Dispositif permettant de transférer des emballages provenant d'un transporteur dans un groupement tridimensionnel et dispositif support d'étagèresm chariot et étagère s'utilisant conjointement avec ledit dispositif

(30) Priority: 09.11.1994 DK 128994
(43) Date of publication of application: 27.08.1997
(73) Proprietor: Sibola A/S, 7120 Vejle Oest (DK)
(72) Inventor: MICHAELSEN, Ole, DK-7100 Vejle (DK); JENSEN, Niels, Friis, DK-6000 Kolding (DK)
(74) Representative: Raffnsöe, Knud Rosenstand
(86) International application number: DK9500447
(87) International publication number: WO9615058

(56) References cited:
- GB-A- 1 341 697
- GB-A- 2 042 214
- US-A- 3 637 095

## Description

The present invention relates to a system comprising a device for transferring packages from a discharge conveyor of a packing machine to a three-dimensional array in form of layers arranged on shelves positioned one above the other, comprising means for assembling a number of packages in a row, the total length of which does not exceed a predetermined value, means for successive lateral movement of successively formed rows for the formation of an assembly of adjacent rows in a layer on a shelf in a predetermined level in the three-dimensional array, the total length of the assembly transversely to the length of the rows not exceeding a predetermined value, and shelf-supporting means for raising the shelves for successive filling of subjacent shelves, the system further comprising shelves carried by the shelf-supporting means and a trolley for carrying the shelves filled by means of the device.

The basis of the invention is the realization of the need for a system of the above-mentioned type. For instance in super markets with their own butcher's store or delicatessen articles are wrapped in packages by means of an automatic packing machine which delivers the packages to a discharge conveyor. To transport the packages from the packing machine to for instance the refrigerated display cases in the sales area of the super market, it is customary to place the packages on shelves which are placed or may be placed above each other in a trolley, whereafter they are taken to the refrigerated display cases. The transfer of the packages from the discharge conveyor of the packing machine to the shelves is normally carried out manually.

The object of the invention is to provide a device and equipment, by means of which the transfer of packages from the discharge conveyor to the shelves placed above one another may take place automatically.

US-A-3 637 095 discloses a cart-loading machine in which containers are forwarded on a conveyor until they are stopped by a stop plate in front of a pusher plate. When a predetermined number of containers are gathered in a row in front of the pusher plate the row is pushed sidewards onto a loading shelf. When a predetermined number of rows are pushed onto the loading shelf this is raised and a lower loading shelf is raised to the position for receiving containers. When all shelves are loaded they are commonly and together with an intermediate frame moved forward to a position where each shelf is positioned above a respective shelf in a cart. The loading shelves are then commonly retracted but pusher members are retained stationary in respect of the shelves of the cart whereby the containers will drop onto the shelves of the cart the loading shelves being retracted beneath the containers.

According to the invention a system with a device for transferring packages is characterized in that the shelves are removable and transferable from the shelf-supporting means to a trolley.

Preferrably the shelf-supporting means comprises two vertical rows of shelf-supporting profiles positioned one above the other and arranged oppositely in such a way that two shelf-supporting profiles from each their row together may support a shelf, and preferrably each shelf comprises a rectangular tray which at two opposite sides is provided with downwards facing support surfaces for resting against the shelf-supporting profiles.

In a preferred embodiment of the invention the device comprises means for scanning the length of the packages, said means being positioned ahead of the means for assembling a row, and means for scanning the width of the packages, said means being positioned outside the range of the three-dimensional array. In this way a close positioning of the packages in the individual layers is made possible.

In an advantageous embodiment of the invention the means for assembling a row comprise a conveyor with a control means adapted to activate the conveyor on arrival of a package to the conveyor and to inactivate the conveyor when the rear end of the packages relative to the direction of travel, has reached a predetermined position. In this way a row of immediately successive packages will be provided on the conveyor.

The conveyor is preferably a roller conveyor, and the means for lateral movement of rows preferably comprise a pusher means. The means for lateral movement of rows preferably comprise further support means for one row of packages, said support means being adapted to extend between the ridges of the conveyor rollers, the support means and the conveyor rollers are adapted to move vertically relative to each other and the support means are adapted to carry the row of packages during the lateral movement. In this way a very careful lateral movement of the rows of packages is obtained without any sliding friction against the underlayer.

In a preferred embodiment the trolley is characteristic in a bottom frame with a rectangular contour and a wheel in each corner, as well as two stanchions which carry two vertical rows of parallel, substantially horizontally protruding carrier rods for the shelves above the bottom frame.

In a preferred embodiment the shelves according to the invention each comprises a rectangular tray which at two opposite sides is provided with two downwards facing support surfaces positioned above each other, preferably in form of sides of a square tube at the two sides of the tray. Such a shelf may easily be transferred from the shelf-supporting device to the trolley by simply advancing the trolley such that the horizontal carrier rods penetrate under the uppermost of the downwards facing support surfaces positioned above each other, and in case the downwards facing support surfaces are constituted by square tubes, the shelves will be retained very safely in the trolley, even if they are drawn out relative to the trolley in order to remove the packages from the shelves.

The invention will be explained in detail in the following by means of examples of embodiments with reference to the schematic drawing, in which
Fig. 1 is an isometric view of a device for transferring packages according to the invention,
Fig. 2 is a lateral view of the device according to Fig. 1 and of the shelf-supporting device according to the invention,
Fig. 3 shows a detail of the shelf-supporting device according to Fig. 2,
Fig. 4a-4c shows the pusher means of the device shown in Fig. 1 in three different positions,
Fig. 5 shows a trolley according to the invention,
Fig. 6 shows a shelf according to the invention, and
Fig. 7 shows a second embodiment of a shelf according to the invention.

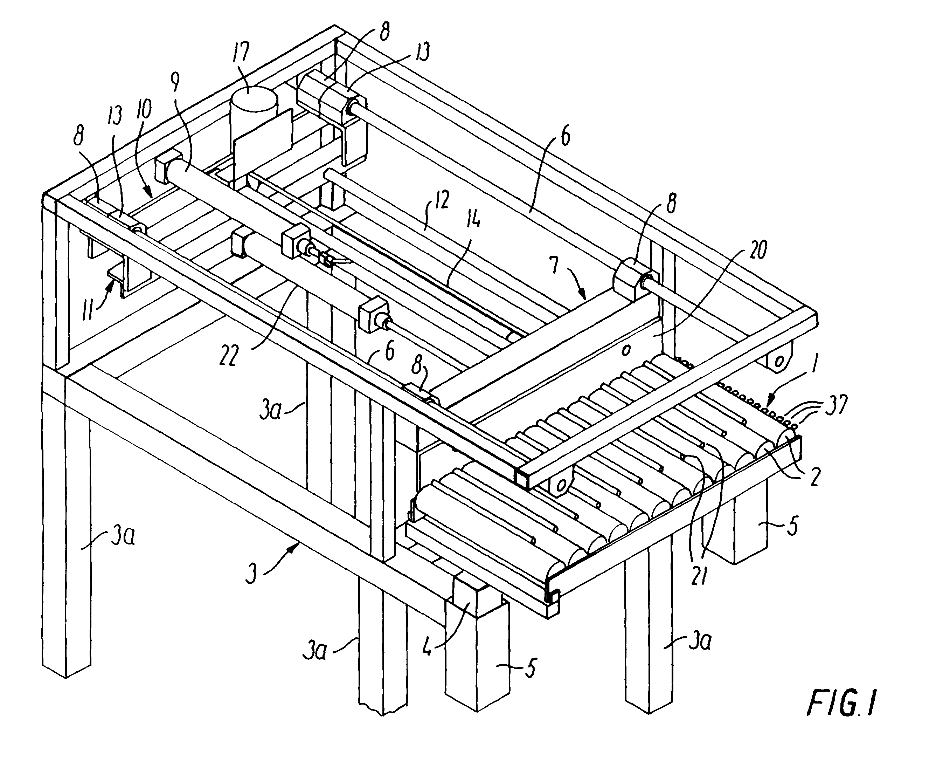

The device shown in Fig. 1 for transferring packages comprises a roller conveyor 1 with driven rollers 2. The roller conveyor is carried height-adjustably by a frame 3 with legs 3a of the device by means of carrier rods 4, which are guided vertically retractable in square socket pipes 5. The frame 3 carries a pair of horizontal, parallel sliding guide rods 6, which carry a sledge 7 suspended on the sliding guide rods 6 by means of slide bushes 8. The sledge 7 may be moved forwards and backwards along the sliding guide rods 6 by means of a pneumatic cylinder 9.

The sledge 7 is divided into an upper sledge 10 comprising the slide bushes 8 and a lower sledge 11 provided with sliding rods 12 extending parallel with the sliding guide rods 6 and slidably journalled in the front end of the upper sledge 10. The rear end of the lower sledge 11 is by means of slide bushes 13 slidably journalled on the sliding guide rods 6. The lower sledge 11 may be moved relative to the upper sledge 10 by means of a driving belt 14 running over rollers 15 and 16, the former one of which being driven by means of an electromotor 17 through an angular drive 18, and which is fastened to the lower sledge 11 at 19. The movement of the drive belt 14 and the lower sledge 11 may be measured (and thus controlled), for instance by providing one of the rollers 15 and 16 with peripheral cams, the passage of which past a photocell is registered.

The lower sledge 11 carries a pushing plate 20 and a pair of supporting rods 21 which may be moved forwards and backwards relative to the pushing plate 20 by means of a pneumatic cylinder 22.

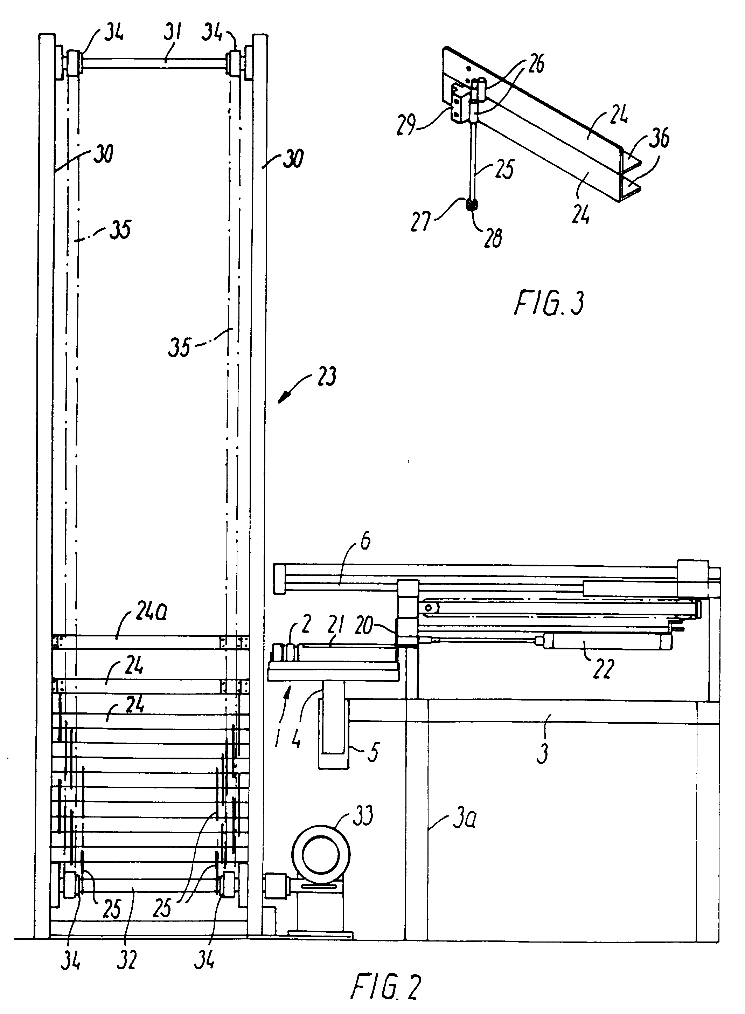

Fig. 2 shows in addition to the transferring device according to Fig. 1 a shelf-supporting device 23. In Fig. 2 the device is shown from one side, and a number of L-profiles 24 placed above one another is shown. These profiles are mutually connected by means of rods 25, which at their upper end are fastened to one L-profile and extending downwards through a bushing 26 in the immediately underlying L-profile (see Fig. 3). The rods 25 are at their lower end provided with a thread, on which a nut 27 and a counternut are provided to establish a stop for the bushing 26. The rods 25 runs easily in the bushings 26, and it is therefore possible to lower the L-profiles 24 and thereby gather them, as shown at the bottom of Fig. 2. If the uppermost L-profile 24a is lifted, it will be raised until the nuts 27 meet the under side of the bushings 26 of the immediately underlying L-profile, following which this will be lifted and so on.

The L-profiles are at their ends provided with guide blocks 29 having a cam which extends in corresponding guide tracks in two side pillars 30 of the shelf-supporting device 23. On top and at the bottom the side pillars 30 hold between them shafts 31, 32, the latter one of which being driven by means of a motor 33. The shafts 31,32 carry rollers 34, over which two belts 35 are running, said belts being fastened to the uppermost L-profile 24a such that it may be raised and lowered by means of the motor 33.

It will be understood that even though the shelf-supporting device according to Fig. 2 is only shown from one side, it looks the same way from the opposite side, the shelf-supporting device 23 comprising two rows of L-profiles 24 arranged mutually in such a way that two L-profiles of each their row between them may carry a shelf on their support surface 36, the upper L-profiles 24a of each row being at any time at the same horizontal level, and the two rows may be raised synchronously by a suitable connection between their driven shafts 32 and the motor 33.

By means of the transfer device according to Fig. 1 and the shelf-supporting device 23 packages, which are delivered one by one to a discharge conveyor by a packing machine not shown, may be transferred to a three-dimensional array, each pair of L-profiles 24 in the shelf-supporting device 23 carrying between them a shelf, on which rows of packages are placed side by side in the following way.

Packages are supplied to the roller conveyor 1 from for instance its right side as seen in Fig. 1 by means of a feed conveyor not shown. The roller conveyor 1 is by means of not shown power means raised relative to the supporting rods 21 such that these rods are positioned between the ridges of the rollers 2. Means are provided for determining the size of the arriving packages, as well longitudinally, as transversely to the roller conveyor 1. These means may for instance comprise a row of photocells 37 at the access end of the roller conveyor 1 and a computer controlling the entire device. By driving the roller conveyor 1 synchronously with the feed conveyor and by comparing their travel speed with the time used by a definite package in passing the photocells 37, the length of the packages may be determined, whereas the width of the package may be read directly by means of the photocells 37 by registering how many of the photocells are covered by the package during its passage.

The roller conveyor is activated by the computer when a signal is received from the photocells to the effect that a new package has arrived from the feed conveyor not shown. The roller conveyor 1 runs until the package has passed the photocells 37, after which it stops again. In this way a row of packages will step by step assemble on the roller conveyor until a predetermined length of the row has been reached. The computer registers the length of the row by summing up the package lengths measured in the way described above.

When a row of the desired length has formed, the roller conveyor 1 is lowered by means of the power means not shown, the carrier rods 4 sliding down into the socket pipes 5. Then the supporting rods 21 are withdrawn relative to the pusher plate 20 by means of the pneumatic cylinder 22, such that they extend somewhat from the pusher plate 20 corresponding to the biggest registered width of a package in the row. The row of packages are now carried by the supporting rods 21 in abutment with the pusher plate 20 and the supporting rods 21 do not extend beyond the broadest package in the row. At this time the sledge 7 is advanced by means of the pneumatic cylinder 9 (Fig. 4b), whereby the packages are transferred onto a shelf in the shelf-supporting device 23, in the example shown in Fig. 2 the upper shelf, which is carried by the uppermost L-profiles 24a. The pusher plate 20 is conveyed transversely over the roller conveyor 1 and placed at the front edge of the shelf in question closest to the roller conveyor 1.

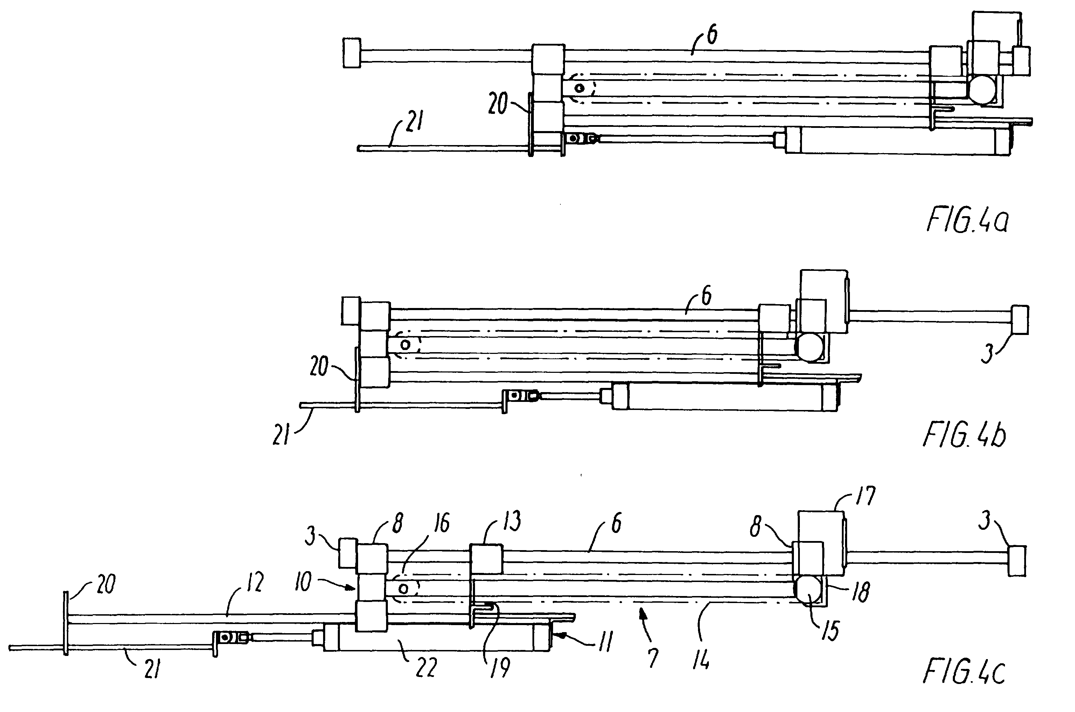

Then the lower sledge 11 comprising the pusher plate 20 and the supporting rods 21 is advanced a predetermined distance, for instance by bringing the row of packages to the rear edge of the shelf (Fig. 4c). Then the supporting rods 21 are further retracted by means of the pneumatic cylinder 22 in such a way that the packages drop down onto the shelf. Then the sledge 67 and the lower sledge 11 are withdrawn to the position shown in Fig. 1 and 4a, and the supporting rods 21 are advanced. The roller conveyor 1 is raised once more and the device is ready for the formation of a new row. The new row will not be conveyed to the rear edge of the shelf when formed, but only to the row already placed there, the distance, which the new row is to be moved on the shelf by means of the lower sledge 11, being calculated by the computer on basis of the registered widths of the rows.

When the total width of rows, which are thus placed on the uppermost shelf, has reached a predetermined value, the uppermost shelf is raised, the motor 33 being activated, whereby the next shelf is raised to the level of the roller conveyor 1, following which this shelf may be filled and so on, until all shelves have been filled.

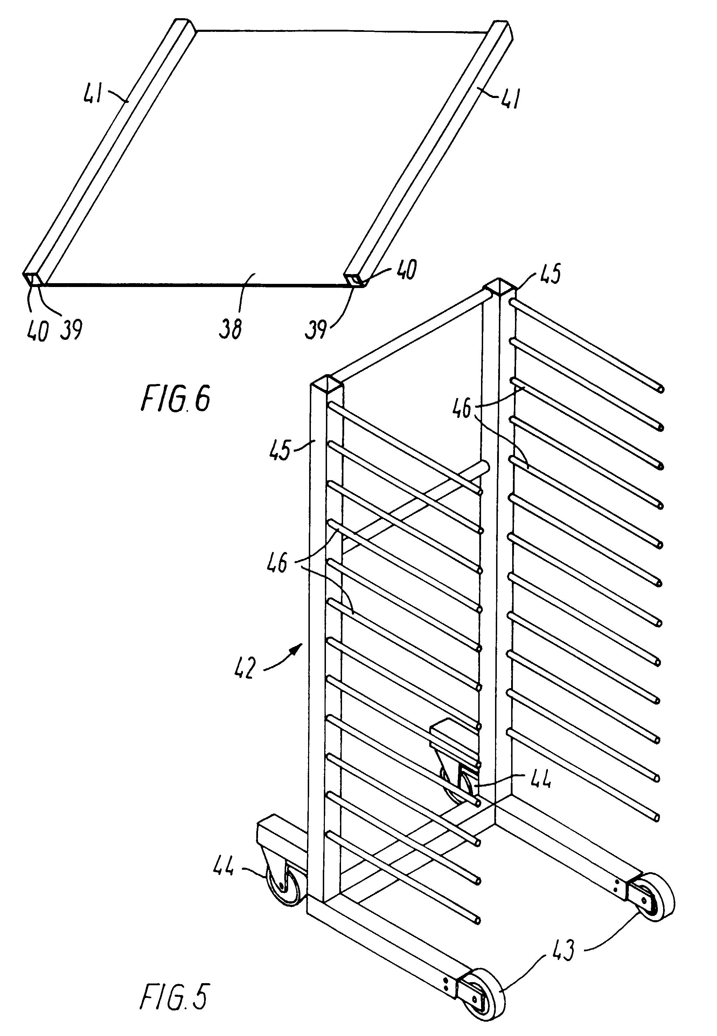

With a view to further transport of the shelves thus filled a shelf has been provided according to the invention, as shown in Fig. 6, and a trolley, as shown in Fig. 5. The shelf 38 shown in Fig. 6 is at its side edges provided with two support surfaces 39, 40 placed above one another in form of an exterior and interior side surface of square tubes 41. In the shelf-supporting device 23 the shelves 38 will rest against their support surfaces 39 against the support surfaces 36 of the L-profiles 24. For transfer of the shelves 38 from the shelf-supporting device 23 to the trolley 42 shown in Fig. 5, which trolley has four wheels 43 and 44 and two stanchions 45, each of which carries a row of horizontal, mutually parallel carrier rods 46, the height of the shelves 38 on the L-profiles 24 is adjusted by means of the motor 33 such that the carrier rods 46 may be inserted in the corresponding square tubes 41 of the shelves 38 by advancing the trolley 42. Then the L-profiles 24 are lowered, and the shelves 38 are then carried by the carrier rods 46 of the trolley 42, said carrier rods resting against the support surfaces 40 within the square tubes 41. The trolley 42 is then driven away with the shelves 38. By performing this method in descending order, a new supply of shelves 38 may be placed in the shelf-supporting device 23. One of the pair of wheels 44 of the trolley 42 is preferably pivotable around a vertical axis to facilitate manouvering of the trolley.

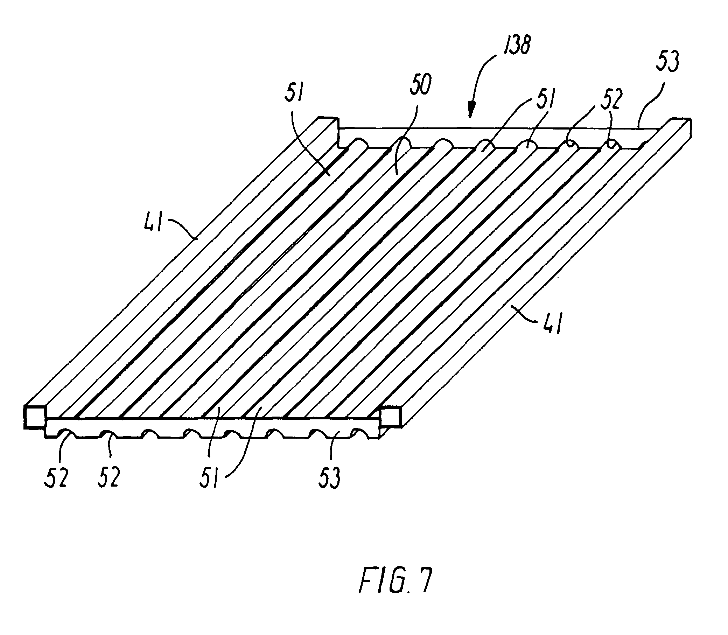

The shelf 138 shown in Fig. 7 comprises like the one shown in Fig. 6 a plate 50, which constitutes the support surface of the shelf 138, and square tubes 41 at two opposite sides of the plate 50. However, the shelf 138 differs from the shelf 38 by comprising evenly spaced, throughgoing notches 51 extending parallel with the sides provided with the square tubes 41. At the two remaining sides the remaining part of the plate 50 is held together by means of upright edges or strips 53 which are provided with notches 52 corresponding to the notches 51.

With this embodiment of the shelf it is possible when assembling rows of packages, instead of using the previously mentioned pusher plate 20 for pushing a row of packages into a shelf 38, to draw out the shelf 138 into a position above the roller conveyor 1, the ridges of the rollers 2 protruding through the notches 51 and into the notches 52. Thereby, packages may be assembled in a row directly on the shelf, as they are still able to roll on the rollers 2, the ridges of which protrude through the notches 51. When a row has been completed, the roller conveyor 1 is lowered, the packages being carried by the plate 50, and the shelf 138 is inserted so far into the shelf-supporting device 23, that the row formed on the shelf is removed from the path of the next packages to be assembled into row. Then the roller conveyor 1 is raised once more, and new packages may be rolled in over the shelf 138 for the formation of a new row. This goes on until the shelf 138 has been filled. The part of the shelf 138 to be displaced in order to move a row formed out of the path of the next one, is determined on basis of measurements of the width of the individual packages, means being provided to ensure that the packages which are transported on to the roller conveyor 1 are placed such that they have a definite, small distance to the side of the roller conveyor 1 facing the shelf-supporting device. When a new shelf 138 is to be filled, it is firstly advanced so far that its rear edge is positioned at said side of the roller conveyor 1, whereby it is ensured that the first row of packages is placed near said rear edge with a definite spacing therefrom. To perform this method the pusher plate 20 and the supporting rods 21 are replaced by means for gripping a shelf 138 in the shelf-supporting device 23, advancing it a predetermined distance forward, keeping it in a constant height and pushing it with predetermined steps back into the shelf-supporting device 23.

## Claims

1. A system comprising a device for transferring packages from a discharge conveyor of a packing machine to a three-dimensional array in form of layers arranged on shelves (24,38) positioned one above the other, comprising means (2) for assembling a number of packages in a row, the total length of which does not exceed a predetermined value, means (20,21) for successive lateral movement of successively formed rows for the formation of an assembly of adjacent rows in a layer on a shelf (24,38) in a predetermined level (24a) in the three-dimensional array, the total length of the assembly transversely to the length of the rows not exceeding a predetermined value, and shelf-supporting means (23) for raising the shelves for successive filling of subjacent shelves, the system further comprising shelves (38) carried by the shelf-supporting means (23) and a trolley (42) for carrying the shelves (38) filled by means of the device, **characterized** in that the shelves (38) are removable and transferable from the shelf-supporting means to the trolley (42).

2. A system according to claim 1,
**characterized** by the shelf-supporting means (23) comprising two vertical rows of shelf-supporting profiles (24) positioned one above the other and arranged oppositely in such a way that two shelf-supporting profiles (24) from each their row together may support a shelf, each shelf comprising a rectangular tray (38) which at two opposite sides is provided with downwards facing support surfaces (39) for resting against the shelf-supporting profiles (24).

3. A system according to claim 1 or 2,
**characterized** by means (37) for scanning the length of the packages, said means being positioned ahead of the means (2) for assembling a row, and means (37) for scanning the width of the packages, said means being positioned outside the range of the three-dimensional array.

4. A system according to claim 1-3,
**characterized** in that the means for assembling a row comprises a conveyor (2) with a control means adapted to activate the conveyor on arrival of a package to the conveyor (2) and to inactivate the conveyor when the rear end of the packages relative to the direction of travel, has reached a predetermined position.

5. A system according to claims 4,
**characterized** in that the conveyor is a roller conveyor (2).

6. A system according to claims 1-5,
**characterized** in that the means for lateral movement of rows comprise a pusher means (20).

7. A system according to claim 5 or 6,
**characterized** in that the means for lateral movement of rows comprises support means (21) for a row of packages, that the support means (21) are adapted to extend between the ridges of the conveyor rollers (2), and in that the support means (21) and the conveyor rollers (2) are adapted to move vertically relative to each other, the support means (21) being adapted to carry the row of packages during the lateral movement.

8. A system according to claim 7,
**characterized** in that the support means are constituted by a shelf (138).

9. A system according to claims 1-8,
**characterized** in the trolley (42) comprising a lower frame with a rectangular contour and a wheel (43, 44) in each corner, as well as two stanchions (45) which carry two vertical rows of parallel, substantially horizontally protruding carrier rods (46) for the shelves above the lower frame.

10. A system according to claims 1-9,
**characterized** in that the shelves each comprises a rectangular tray (38) which at two opposite sides is provided with two downwards facing support surfaces (39, 40) positioned above each other, preferably in form of sides in a square tube (41) at the two sides of the tray.

11. A system according to claims 8 and 10,
**characterized** in the trays each comprising evenly spaced notches (51) extending parallel with the sides preferably provided with square tubes (41).

## Patentansprüche

1. Anlage mit einer Vorrichtung zum Fördern von Packungen aus dem Abladeförderer einer Verpackungsmaschine in dreidimensionaler Aufstellung in Form von übereinander angebrachten auf Regalbrettern (24,38) ruhenden Packungsschichten (24,38), welche Vorrichtung Mittel (2) zur Bildung einer Packungsmenge in einer Reihe, deren Gesamtlänge eine vorbestimmte Grösse nicht übersteigt, Mittel (20,21) zur sukzessiven Querverstellung sukzessiv gestalteter Reihen zur Bildung einer Gesamtmenge von benachbarten Reihen auf einem vorbestimmten Niveau (24a) in eine auf einem Regalbrett (24,38) dreidimensional angeordnete Packungsschicht, wobei die Gesamtlänge querab der Reihenlänge eine vorbestimmte Grösse nicht übersteigt, und Regalbretträger (23) zum Heben der Regalbretter im Hinblick auf Füllen unterliegender Regalbretter umfasst, und dass in der Anlage desweiteren von Regalbretträgern (23) unterstützende Regalbretter (38) und ein Rollwagen (42) zum Tragen der durch die Vorrichtung gefüllten Regalbretter inbegriffen sind, dadurch **gekennzeichnet,** dass die Regalbretter (38) ausnehmbar sind und von den Regalbretträgern auf den Rollwagen (42) weitergeleitet werden können.

2. Anlage nach Anspruch 1, **gekennzeichnet** durch Regalbretträger (23) umfassend zwei senkrechte Reihen von Regalbretträgerprofilen (24), die übereinander und gegenübereinander derart angeordnet sind, dass zwei Regalbretträgerprofile (24) aus je ihrer Reihe zusammen ein Regalbrett unterstützen, wobei jedes Regalbrett ein rechteckiges Tablett (38), das zur Lagerung auf den Regalbretträgerprofilen (24) an zwei gegenüberliegenden Seiten mit nach unten gerichteten Unterstützungsflächen (39) versehen ist, umfasst.

3. Anlage nach Anspruch 1 oder 2, **gekennzeichnet** durch zum Abtasten der Länge der Packungen vorgesehene Mittel (37), die vor den Mitteln (2) zur Bildung einer Reihe angeordnet sind, und zum Abtasten der Breite der Packungen vorgesehene Mittel (37), die ausserhalb des Bereiches der dreidimensionalen Aufstellung angeordnet sind.

4. Anlage nach Ansprüchen 1-3, dadurch **gekennzeichnet**, dass das Mittel zur Bildung einer Reihe einen Förderer (2) mit einem Steuermittel zum Anlaufen des Förderers, sobald eine Packung den Förderer (2) erreicht, und Anhalten des Förderers, sobald das hintere Ende der Packungen im Verhältnis zur Bewegungsrichtung an eine vorbestimmte Position gelangt ist, umfasst.

5. Anlage nach Anspruch 4, dadurch **gekennzeichnet,** dass der Förderer ein Rollenförderer (2) ist.

6. Anlage nach Ansprüchen 1-5, dadurch **gekennzeichnet,** dass die Mittel zur seitlichen Verstellung der Reihen ein Schubmittel (20) umfassen.

7. Anlage nach Anspruch 5 oder 6, dadurch **gekennzeichnet,** dass das Mittel zur seitlichen Verstellung der Reihen Unterstützungsmittel (21) für eine Reihe von Packungen umfasst, dass die Unterstützungsmittel (21) ausgeformt sind, zwischen den Spitzen der Förderrollen (2) zu verlaufen, und dass die Unterstützungsmittel (21) und die Förderrollen (2) für senkrechte Verstellung gegenübereinander vorgesehen sind, wobei die Unterstützungsmittel (21) ausgeformt sind, die Reihe von Packungen während der Querverstellung tragen zu können.

8. Anlage nach Anspruch 7, dadurch **gekennzeichnet**, dass die Unterstützungsmittel aus einem Regalbrett (138) bestehen.

9. Anlage nach Ansprüchen 1-8, dadurch **gekennzeichnet,** dass der Rollwagen (42) einen Unterrahmen rechteckiger Ausformung und ein sich an jedem dessen Ecken befindliches Rad (43, 44) sowie zwei Säulen (45) mit zwei senkrechte Reihen von parallelen im wesentlichen horizontal vorspringende Trägerstangen (46) zur Unterstützung der sich über dem Unterrahmen befindlichen Regalbretter, umfasst.

10. Anlage nach Ansprüchen 1-9, dadurch **gekennzeichnet,** dass die Regalbretter je ein rechteckiges Tablett (38), welches an zwei gegenüberliegenden Seiten mit zwei nach unten gerichteten, übereinander angeordeten Unterstützungsflächen (39, 40), vorzugsweise in Form von Seiten eines viereckigen Rohrs (41) an den beiden Seiten des Tabletts, versehen ist, umfasst.

11. Anlage nach Ansprüchen 8 und 10, dadurch **gekennzeichnet**, dass die Tabletts je regelmässig verteilte Kerben (51), welche mit den vorzugsweise durch viereckige Rohre (41) entstandenen Seiten parallel verlaufen, umfassen.

## Revendications

1. Système comprenant un dispositif permettant de transférer des emballages provenant d'un transporteur de sortie d'une machine d'emballage dans un groupement tridimensionnel dans la forme de lits arrangés sur des étagères (24, 38) l'une situé au-dessus de l'autre, comprenant des moyens (2) pour assembler un nombre d'emballages dans un rang, dont la longueur totale n'excède pas une valeur prédéterminée, des moyens (20, 21) pour mouvement latéral successif de rangs formés successivement pour la formation d'un assemblement de rangs avoisinants dans un lit sur un étagère (24, 38) dans un niveau prédéterminé (24a) dans le groupement tridimensionnel, la longueur totale de l'assemblement en travers à la longueur des rangs n'excédant pas une valeur prédéterminée, et un dispositif support d'étagères (23) pour élever les étagères pour remplissage successif des étagères sous-jacentes, le système comprenant de plus des étagères (42) supportées par le dispositif support d'étagères (23) et un chariot (38) pour porter les étagères (38) remplies au moyen du dispositif, **caractérisé** en ce que les étagères (38) peuvent être déplacées et transférées du dispositif support d'étagères au chariot (42).

2. Système selon la revendication 1, **caractérisé** en ce que le dispositif support d'étagères (23) comprend deux rangs verticaux de profils supports d'étagères (24) l'un situé au-dessus de l'autre et arrangés mutuellement opposés si bien que de chaque son rang, les deux profils supports d'étagères (24) peuvent ensemble supporter une étagère, chaque étagère comprenant un plateau rectangulaire (38) qui à deux côtés opposés est pourvus de surfaces de support tournées vers le bas (39) pour rester contre les profils supports d'étagères (24).

3. Système selon la revendication 1 ou 2, **caractérisé** par des moyens (37) pour exploration de la longueur des emballages, lesdits moyens étant situé devant les moyens (2) pour assemblage d'un rang, des moyens (37) pour exploration de la largeur des emballages, moyens qui sont arrangés en dehors du rang du groupement tridimensionnel

4. Système selon la revendication 1-3, **caractérisé** en ce que le moyen pour assembler un rang comprend un transporteur (2) avec un dispositif de commande conçu pour activer le transporteur à l'arrivée d'un emballage au transporteur (2) et pour inactiver le transporteur lorsque l'arrière des emballages par rapport au sens de transport est arrivé à une position prédéterminée.

5. Système selon la revendication 4, **caractérisé** en ce que le transporteur est un transporteur à rouleaux (2).

6. Système selon les revendications 1-5, **caractérisé** en ce que les moyens pour mouvement latéral des rangs comprennent un pousseur (20).

7. Système selon la revendication 5 ou 6, **caractérisé** en ce que le moyen pour mouvement latéral des rangs comprend des supports (21) pour un rang d'emballages, en ce que les supports (21) sont conçus pour s'étendre entre les parties supérieures des rouleaux de transport (2), et en ce que les supports (21) et les rouleaux de transport (2) sont adaptés à se déplacer verticalement l'un par rapport à l'autre, les supports (21) étant adaptés à porter le rang d'emballages lors du mouvement latéral.

8. Système selon la revendication 7, **caractérisé** en ce que les supports sont constitués par une étagère (138).

9. Système selon les revendications 1-8, **caractérisé** en ce que le chariot (42) comprenant un cadre inférieure avec un contour rectangulaire et une roue (43, 44) dans chaque coin, ainsi que deux montants (45) qui portent deux rangs verticaux de barres porteuses parallèles et faisant saillie essentiellement horizontalement (46) pour les étagères au-dessus du cadre inférieure.

10. Système selon les revendications 1-9, **caractérisé** en ce que chaque étagère comprend un plateau rectangulaire (38) qui à deux côtés opposés est pourvu de deux surfaces de support tournées vers le bas et l'une placée au-dessus de l'autre (39, 40), préférablement dans la forme de côtés dans un tube carré (41) aux deux côtés du plateau.

11. Système selon les revendications 8 et 10, **caractérisé** en ce que chaque plateau comprend des coupes (51) régulièrement espacées et s'étendant parallèlement aux côtés préférablement pourvues de tubes carrés (41).
